Europäisches Patentamt

European Patent Office

Office européen des brevets

(19)

(11) Numéro de publication: **0 059 143**
**B1**

(12)

# FASCICULE DE BREVET EUROPEEN

(45) Date de publication du fascicule du brevet:
**12.03.86**

(51) Int. Cl.⁴: **F 16 F 7/14**, F 16 L 3/16

(21) Numéro de dépôt: **82400274.5**

(22) Date de dépôt: **16.02.82**

(54) **Support amortisseur antivibratile, antichocs.**

(30) Priorité: **17.02.81 FR 8103064**

(43) Date de publication de la demande:
**01.09.82 Bulletin 82/35**

(45) Mention de la délivrance du brevet:
**12.03.86 Bulletin 86/11**

(84) Etats contractants désignés:
**AT BE CH DE FR GB IT LI LU NL SE**

(56) Documents cités:
**DE - C - 541 416**
**FR - A - 782 906**
**FR - A - 1 372 335**
**FR - A - 1 460 785**
**FR - A - 1 560 072**
**FR - A - 1 569 208**
**FR - A - 2 033 193**
**FR - A - 2 189 660**
**FR - A - 2 359 324**
**GB - A - 878 776**
**US - A - 2 154 586**
**US - A - 2 525 730**
**US - A - 3 007 660**

(73) Titulaire: **SOCITEC SOCIETE POUR LE COMMERCE
INTERNATIONAL ET LES ECHANGES TECHNIQUES,
Z.I. du Prunay 37-41 Rue Benoît Frachon,
F-78500 Sartrouville (FR)**

(72) Inventeur: **Prost, Claude, 27 Rue du Vieil Abreuvoir,
F-78100 Saint Germain en Laye (FR)**

(74) Mandataire: **Rinuy, Guy et al, Cabinet Rinuy et
Santarelli 14, Avenue de la Grande Armée, F-75017 Paris
(FR)**

ACTORUM AG

**Description**

On connaît déjà depuis longtemps les supports amortisseurs à câble métallique dont le principe consiste à utiliser un câble en acier, enroulé en hélice et ancrés par des barrettes (voir les figures 1, 1A, 1B des dessins annexés) et le brevet FR-A-1 372 335.

Les principaux avantages de ces supports résident dans: une construction entièrement métallique; une bonne isolation combinée contre les chocs et les vibrations; une efficacité omnidirectionnelle; une large fourchette de température de service; une excellente résistance à la corrosion; et une très grande robustesse.

Dans la description qui suit, ce type de support amortisseur connu sera désigné par le terme «support classique».

La présente invention se rapporte à un support amortisseur pour lequel on utilisera plus loin le vocable «support amélioré». Elle vise en effet à améliorer, dans une proportion importante, les performances chocs-vibrations des supports amortisseurs à câble métallique classiques tout en en augmentant la charge admissible.

Les charges unitaires des supports classiques s'étendent de quelques grammes à quelques tonnes, ce qui est insuffisant pour les utiliser dans de nombreuses applications, compte tenu de l'encombrement important nécessité par un grand nombre de supports. Par ailleurs, il est difficile de réaliser économiquement des supports pour charge importante, toujours selon le type classique, en raison notamment de ce qu'un câble de grand diamètre est difficile à enrouler.

En revanche, dans le cadre de la présente invention, les supports peuvent accepter de très fortes charges et sont réalisables en conservant un volume identique à celui des supports classiques et en en conservant les avantages inhérents.

En outre, dans de nombreux cas, les suspensions à câble sont destinées à protéger des chocs des matériels fragiles installés dans des containers spéciaux; les gabarits disponibles rendent souvent aigus les problèmes d'encombrement et la déflexion dynamique des suspensions doit être la plus réduite possible eu égard à l'accélération résiduelle admissible sur le spécimen, pour absorber un choc donné.

La présente invention permet de diminuer considérablement la course nécessaire, en augmentant la capacité d'absorption d'énergie de la suspension, pour un résiduel inchangé, et même souvent plus faible.

De plus, en vibrations, la fréquence propre du système est variable, selon la sévérité de la sollicitation, et la non linéarité introduite par le raidisseur permet, dans certains cas, d'éviter des amplitudes trop élevées à la résonance.

Enfin, dans de nombreux cas, les déplacements dynamiques des plots antivibratiles doivent être réduits en cas de surcharge accidentelle ou non et les supports améliorés selon l'invention peuvent remplir l'office supplémentaire de butée progressive par rapport aux supports classiques.

On connaît par le brevet US-A-2.525.730 une suspension élastique, sans amortissement, réalisée au moyen d'un ressort hélicoïdal classique «écrasé» latéralement.

Des surfaces courbes de palier ou des gorges plus ou moins ouvertes formant sièges sont prévues pour recevoir le ressort entre les masses en présence. Il n'y a aucun ancrage des spires du ressort qui, au contraire, dispose d'une certaine liberté entre les surfaces du palier ou les gorges. On assiste en effet à un roulage du ressort entre les surfaces de palier, à la manière d'un rouleau de palier.

L'ouverture ou l'évasement des surfaces ou gorges de palier permet un degré plus ou moins grand de mouvement latéral des masses suspendues.

Les parties relevées de ces surfaces ne constituent en aucune manière des moyens raidisseurs du ressort lequel, n'étant pas ancré, roule sur ces surfaces.

On connait par le brevet US-A-2.154.586 un dispositif amortisseur de choc du type à blocs élastiques à géométrie de déformation contrariée par des plaques fixes rigides.

Il doit être remarqué que la fixation des blocs élastiques aux plaques se fait par vulcanisation selon une large portion de la surface latérale des blocs.

On connaît enfin par le document DE-C 541.416 une suspension élastique à caractéristique variable comportant des ressorts à lame, courbes, répartis régulièrement selon les longitudes d'une sphère et des raidisseurs sous la forme de piges réglables prenant appui sur une cloche, les ressorts, à l'endroit des pôles de la sphère, étant fixés aux masses en présence.

La présente invention vise un support amortisseur anti-vibratile/antichocs à câble, de préférence métallique, enroulé en hélice, comprenant un nombre variable de fils et de torons et dont les spires sont ancrées selon une faible portion de chaque spire, par au moins deux barrettes espacées, lequel support se caractérise en ce qu'il comprend au moins un moyen raidisseur qui agit directement sur le câble entre les deux barrettes d'ancrage afin de diriger son mouvement sous l'effet de la charge.

D'autres caractéristiques et avantages de la présente invention ressortiront de la description qui va suivre faite en regard des dessins annexés sur lesquels:

Les figures 1, 1A et 1B schématisent un support à câble métallique classique et représentent, respectivement, le support soumis à des sollicitations en roulis compression à plat et cisaillement (les traits pleins fins symbolisent le câble dans sa position initiale et les pointillés montrent la déformation de la boucle sous l'effet de la charge: pour la clarté de l'exposé, les sollicitations ont été volontairement décomposées en trois sollicitations principales, mais il est clair que la réalité est toujours une combinaison d'entre elles);

– les figures 2, 2A et 2B sont en correspondance comparative avec les figures 1, 1A et 1B et schématisent un support à câble amélioré selon la présente invention;

– les figures 3, 4 et 5 représentent trois cas typiques d'amélioration possible de caractéristiques et chaque figure montre une courbe force-déflexion, la force (F) étant portée en ordonnée et le déplacement (δ) en abscisse (les symboles (F) et (δ) sont également indiqués sur les figures 1, 1A, 1B et 2, 2A, 2B);

– les figures 6 et 6A sont des vues, respectivement en élévation latérale et en bout, d'une forme de réalisation d'un support amélioré;

– les figures 7 et 7A sont des vues, respectivement en élévation latérale et en bout, d'une autre forme de réalisation d'un support amélioré;

– la figure 8 est une vue en bout d'une autre forme de réalisation d'un support amélioré;

– la figure 9 est une vue en coupe d'encore une autre variante de support amélioré;

– les figures 10 et 11 sont des vues en bout de deux autres variantes de support amélioré;

– les figures 12 et 13 sont des vues en élévation latérale schématique et en coupe partielle de deux variantes de moyens de précontrainte de cisaillement;

– la figure 14 est une vue en élévation schématique d'une variante de disposition de supports améliorés.

La présente invention a pour objet un support antivibratile/antichocs à élément élastique, lequel support est amélioré par un système de moyens raidisseurs et de moyens de précontrainte, longitudinale, destiné à réaliser la protection active ou passive d'un matériel contre les chocs et les vibrations.

L'élément élastique (1) est un câble, de préférence métallique, comportant un nombre variable de fils et de torons selon les caractéristiques d'amortissement recherchées. Ce câble est enroulé en hélice et retenu par des barrettes (2).

Au moins l'une des barrettes comporte des moyens raidisseurs (3) permettant d'augmenter les caractéristiques de raideur et/ou de remplir un rôle de butée progressive selon un ou plusieurs axes.

Les moyens de précontrainte en cisaillement (4) sont inclus entre deux demi-barrettes (2A-2B) et peuvent être variables par écartement de ces demi-barrettes afin de raidir le support selon cet axe et d'éviter tout phénomène d'instabilité.

Les perfectionnements apportés dans le cadre de la présente invention «raidissent» sensiblement le support anti-vibratile/antichocs, et ceci dans toutes les directions.

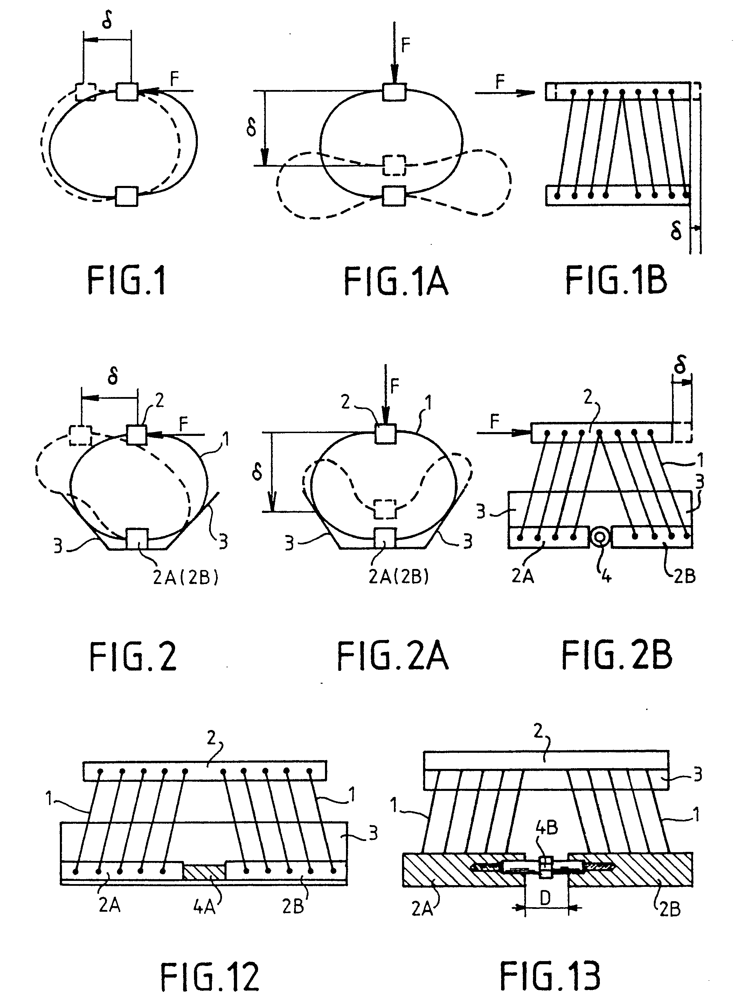

Cette amélioration de caractéristiques, confirmée par le calcul et l'expérimentation, est illustrée sur les figures 2, 2A, 2B.

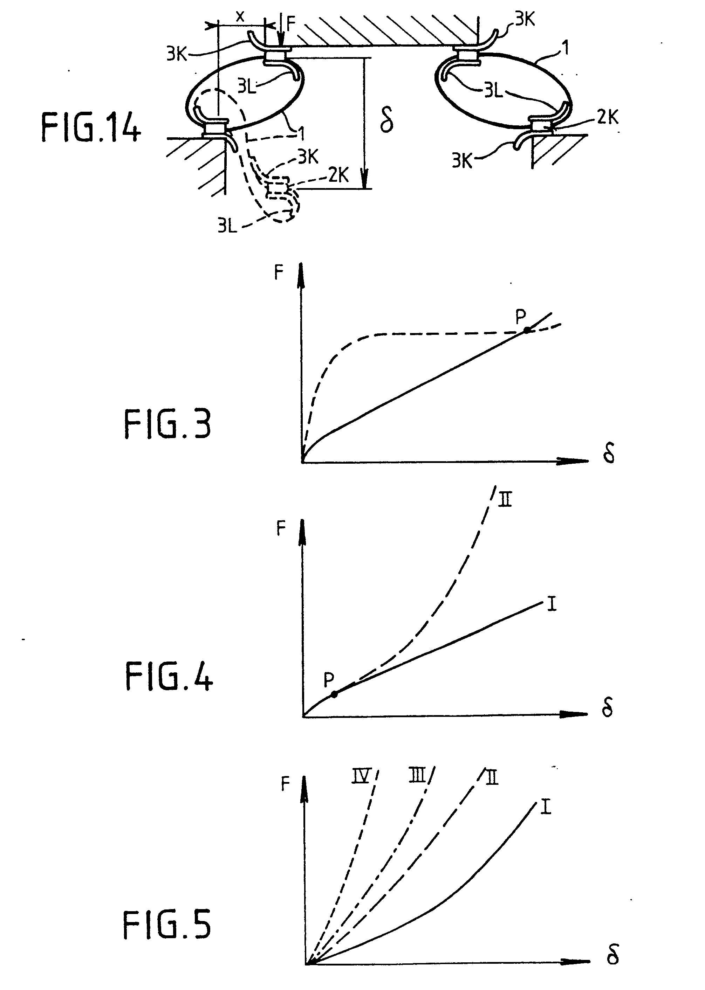

Si l'on se reporte, à présent, aux figures 3 à 5, le trait plein (I) représente la courbe obtenue avec un support à câble classique et les traits pointillés référencés (II) (III) ou (IV) représentent les courbes obtenues avec un support amélioré.

La figure 3 est un exemple illustrant la possibilité d'amélioration de l'énergie potentielle emmagasinable dans le support, laquelle énergie est égale à l'aire entre la courbe et l'axe des abscisses. La force en ordonnée, est celle appliquée au matériel protégé. On voit donc que pour un point de fonctionnement (P), indiqué sur la figure, la capacité énergétique du support amélioré est presque double de celle du support classique. En d'autres termes, pour une énergie donnée, le support amélioré demande une déflexion dynamique plus faible, économisant, d'autant, l'espace disponible à prévoir.

La figure 4 illustre l'utilisation de la présente invention en butée progressive. Le point de fonctionnement (P) indique la charge statique appliquée au support. Dans le cas du support classique (courbe I), on voit que l'application d'un effort dynamique accidentel important entraîne une déflexion dynamique beaucoup plus importante que dans le cas du support amélioré (courbe II). Cette particularité est très intéressante pour toute suspension devant présenter des débattements limités (moteurs reliés à un accouplement très rigide et à des tuyauteries, comme c'est le cas pour les moteurs de propulsion marine par exemple).

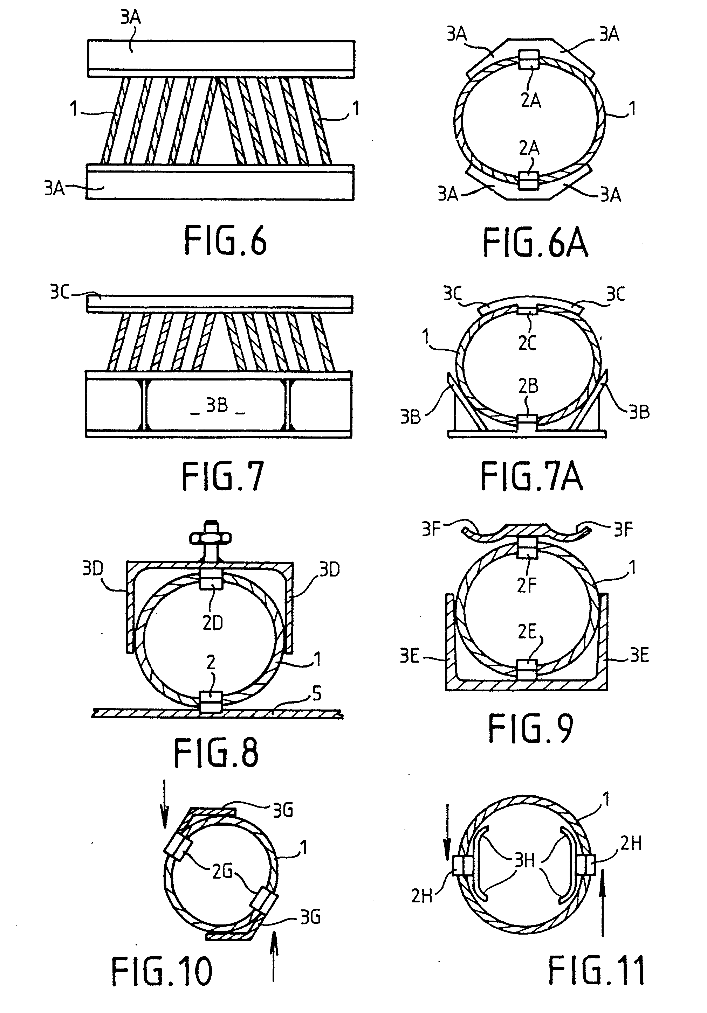

La figure 5 illustre les effets d'une précontrainte en cisaillement. La courbe (I) représente le support classique, les courbes (II), (III), et (IV) représentent le support amélioré avec une précontrainte de plus en plus importante, respectivement. Ce système de précontrainte appartient au cadre de la présente invention en ce sens que les raidisseurs améliorant les caractéristiques en compression et roulis, il est indispensable de les améliorer également en cisaillement, afin d'éviter tout phénomène d'instabilité qui pourrait être engendré par des disproportions entre les raideurs selon les trois axes principaux.

Il est clair, que selon les cas, on peut avoir un support amélioré soit par raidisseurs, soit par précontrainte en cisaillement, soit par une combinaison des deux, sans sortir du cadre de la présente invention, celle-ci ayant pour but général la rigidification du support classique selon un, deux ou trois axes. Entre autre, un support basse fréquence peut être réalisé par une précontrainte en cisaillement uniquement afin de préserver la stabilité latérale en diminuant la raideur verticale.

Les trois cas types précédemment décrits ne sont pas exhaussifs et la présente invention pourra trouver un intérêt particulier selon chaque cas.

Les figures 6–6A, 7–7A et 8 à 13 donnent quelques exemples de dispositions pratiques, non exhaussifs et l'on pourra apporter d'autres variantes de configurations sans sortir du cadre de la présente invention. Chaque cas inclut les moyens de précontrainte en cisaillement décrits.

Les supports sont en général métalliques, en particulier pour les applications sévères (chaleur, corrosion), mais peuvent être réalisés en tout autre matériau jugé opportun. Entre autres, le câble peut être en une matière synthétique telle le «Nylon», ou même métallique, enrobé d'une substance protectrice. Le câble est «serré entre les barrettes (2), par des moyens mécaniques préférentiellement, et les raidisseurs (3) peuvent comporter des dispositions à gorges, afin de guider le câble, ou être recouverts de tout matériau adéquat permettant d'éviter des problèmes de contact entre câble et raidisseurs.

Il est clair que les raidisseurs (3) peuvent former partie intégrante d'une barrette (2) ou être rapportés par vis ou tout autre moyen sur celle-ci.

L'ensemble peut être réalisé par tout procédé jugé intéressant et, entre autres, en construction mécanosoudée, par fonderie, forgeage, etc.

Dans la forme de réalisation représentée aux figures 6 et 6A, chaque ensemble (barrette-raidisseurs) (2A-3A) constitue une gouttière et est disposé en vis-à-vis d'un autre ensemble barrette-raidisseurs en forme de gouttières également (2A-3A).

Dans la forme de réalisation représentée aux figures 7 et 7A, les raidisseurs (3B) font partie d'un ensemble (barrette-raidisseurs) (2B-3B) et en vis-à-vis de cet ensemble est disposé un ensemble barrette-raidisseurs (2C-3C) de forme courbe épousant les boucles du câble (1) enroulé en hélice.

Dans la forme de réalisation représentée à la figure 8, un ensemble (barrette-raidisseurs) (2D-3D) de section droite en «U» coiffe les boucles du câble (1) retenues en vis-à-vis par une barrette (2) fixée sur une simple plaque (5).

Dans la forme de réalisation de la figure 9, un ensemble (barrette-raidisseurs) (2E-3E) également de section droite en «U», constitue un berceau pour les boucles du câble (1). En vis-à-vis, est disposé un ensemble (barrette-raidisseurs) (2F-3F) en forme de chapeau de gendarme.

Dans chacun des ensembles barrette-raidisseurs exposés ci-dessus, les raidisseurs constituent des ailes de raidissement de part et d'autre de la barrette considérée et sont disposés à l'extérieur des boucles du câble (1).

Dans la forme de réalisation de la figure 10, une seule aile de raidissement constitue le raidisseur (3G) associé à chaque barrette (2G).

Selon une variante non représentée, une seule aile de raidissement associée à une barrette ou à chaque barrette est envisagée à l'intérieur des boucels du câble.

Dans la variante de la figure 11, deux ailes de raidissement constituent les raidisseurs (3H) de part et d'autre de chaque barrette (2H) et les raidisseurs se trouvent également à l'intérieur des boucles du câble (1) amenant ainsi un contact progressif.

Les figures 12 et 13 montrent les moyens de précontrainte en cisaillement selon deux variantes possibles.

Sur la figure 12, les moyens de précontrainte en cisaillement sont déterminés par le constructeur au moyen de cales (4A).

Dans la variante de la figure 13, les moyens de précontrainte en cisaillement sont rendus réglables (4B) (variation D), et sont constitués par un dispositif tournant, pas à gauche, pas à droite.

Bien entendu, ces deux exemples de réalisation ne sont représentés qu'à titre indicatif.

Bien que les explications précédentes se soient limitées, pour des raisons de clarté, à des cas de charge suivant trois axe trirectangulaires, toute possibilité combinée, ou toute inclinaison des supports selon un, deux ou trois plans sont possibles et ne s'écartent pas de l'amélioration proposée. On peut entre autre réaliser un support avec une précontrainte en roulis et une butée inférieure de fin de course. (Ce système présente l'avantage d'un montage plus simple qu'une configuration à 45° avec les mêmes avantages, soit course importante, soit butée progressive et raideur latérale très importante.)

Il est clair que la variation de la cote «x» (figure 14) modifie les performances du système. Dans ce cas, les raidisseurs permettent de ne pas «blesser» le câble. Dans cette disposition, chaque raidisseur (3K) extérieur au câble et chaque raidisseur (3L) intérieur au câble se trouvent être tête-bêche par rapport à la barrette (2K).

D'une manière générale, il va de soi que la présente invention n'a été décrite et représentée qu'à titre d'exemple préférentiel et que l'on pourra apporter des équivalences dans ses éléments constitutifs sans sortir de son cadre.

## Revendications

1. Support amortisseur anti-vibratile/antichocs à câble (1), de préférence métallique, enroulé en hélice, comprenant un nombre variable de fils et de torons et dont les spires sont ancrées selon une faible portion de chaque spire par au moins deux barrettes (2) espacées, lequel support se caractérise en ce qu'il comprend au moins un moyen raidisseur (3) qui agit directement sur le câble entre les deux barrettes d'ancrage afin de diriger son mouvement sous l'effet de la charge.

2. Support selon la revendication 1 caractérisé en ce qu'il comprend également des moyens de précontrainte (4).

3. Support selon l'une quelconque des revendications 1 et 2 caractérisé en ce que lesdites barrettes (2) comportent lesdits moyens raidisseurs (lesquels permettent d'augmenter les caractéristiques de raideur et/ou de remplir un rôle de butée progressive selon un ou plusieurs axes) ainsi que lesdits moyens de précontrainte en cisaillement (4).

4. Support selon l'une quelconque des revendications 2 et 3 caractérisé en ce que les moyens de précontrainte (4) sont inclus entre deux demi-barrettes (2A-2B).

5. Support selon la revendication 4 caractérisé en ce que les moyens de précontrainte en cisaillement sont rendus réglables par un dispositif d'écartement (4A) des deux demi-barrettes (2A-2B).

6. Support selon la revendication 4 caractérisé en ce que les moyens de précontrainte en cisaillement sont déterminés, au montage, par des cales (4B).

7. Support selon l'une quelconque des revendications 1 et 3 caractérisé en ce que chaque moyen raidisseur fait partie intégrante d'une barrette.

8. Support selon l'une quelconque des revendications 1 et 3 caractérisé en ce que chaque moyen raidisseur est rapporté sur une barrette par tout procédé approprié.

9. Support selon l'une quelconque des revendications 1 et 3 et 7 et 8 caractérisé en ce que des ensembles barrettes-raidisseurs comportent deux ailes de raidissement de part et d'autre de la barrette.

10. Support selon l'une quelconque des revendications 1 et 3 et 7 et 8 caractérisé en ce qu'une barrette et une seule aile de raidissement constituent un ensemble barrette-raidisseur.

11. Support selon l'une quelconque des revendications 9 et 10 caractérisé en ce que les ensembles barrette-raidisseurs et les ensembles barrette-raidisseur sont disposés à l'extérieur des boucles du câble.

12. Support selon l'une quelconque des revendications 9 et 10 caractérisé en ce que les ensembles barrette-raidisseurs et les ensembles barrette-raidisseur sont disposés à l'intérieur des boucles du câble.

13. Support selon l'une quelconque des revendications 11 et 12 caractérisé en ce que, suivant une disposition, chaque raidisseur (3K) extérieur au câble et chaque raidisseur (3L) intérieur au câble se trouvent être tête-bêche par rapport à la barrette (2K).

## Patentansprüche

1. Vibrations- und stossdämpfendes Lager mit einem vorzugsweise metallischen, wendelförmig gewickelten Seil (1), das eine variable Zahl von Drähten und Strängen umfasst und dessen Windungen an einem kleinen Abschnitt jeder Windung mittels zwei mit Abstand versehener Stege (2) verankert sind, wobei die Lagerung dadurch gekennzeichnet ist, dass sie mindestens ein Versteifungsmittel (3) umfasst, das direkt auf das Seil zwischen den zwei Verankerungsstegen einwirkt, um seine Bewegung unter Einwirkung der Belastung zu richten.

2. Lagerung nach Anspruch 1, dadurch gekennzeichnet, dass sie gleichermassen Vorspannmittel (4) umfasst.

3. Lagerung nach einem der Ansprüche 1 und 2, dadurch gekennzeichnet, dass die Stege (2) die Versteifungsmittel tragen (welche die Erhöhung der Steifigkeitseigenschaften erlauben und/oder die Übernahme der Funktion eines progressiven Anschlages nach einer oder mehreren Achsen) wie auch die Vorspannmittel (4) durch Querkraft.

4. Lagerung nach einem der Ansprüche 2 und 3, dadurch gekennzeichnet, dass die Vorspannmittel (4) zwischen zwei Halbstegen (2A-2B) enthalten sind.

5. Lagerung nach Anspruch 4, dadurch gekennzeichnet, dass die Vorspannmittel durch Querkraft durch eine Spreizeinrichtung (4A) der beiden Halbstege (2A-2B) einstellbar gemacht sind.

6. Lagerung nach Anspruch 4, dadurch gekennzeichnet, dass die Vorspannmittel durch Querkraft bei der Montage durch Zwischenlagen (4B) bestimmt sind.

7. Lagerung nach einem der Ansprüche 1 und 3, dadurch gekennzeichnet, dass jedes Versteifungsmittel einen integralen Teil eines Steges bildet.

8. Lagerung nach einem der Ansprüche 1 und 3, dadurch gekennzeichnet, dass jedes Versteifungsmittel durch ein beliebiges geeignetes Verfahren an einem Steg angebracht ist.

9. Lagerung nach einem der Ansprüche 1 und 3 und 7 und 8, dadurch gekennzeichnet, dass aus Stegen und Versteifern bestehende Einheiten zwei Versteiferarme zu beiden Seiten des Steges aufweisen.

10. Lagerung nach einem der Ansprüche 1 und 3 und 7 und 8, dadurch gekennzeichnet, dass ein Steg und ein einzelner Versteiferarm eine Steg-Versteifer-Einheit bilden.

11. Lagerung nach einem der Ansprüche 9 und 10, dadurch gekennzeichnet, dass die aus Stegen und Versteifern bestehenden Einheiten und die Steg-Versteifer-Einheiten an der Aussenseite der Seilwindungen angeordnet sind.

12. Lagerung nach einem der Ansprüche 9 und 10, dadurch gekennzeichnet, dass die aus Stegen und Versteifern bestehenden Einheiten und die Steg-Versteifer-Einheiten im Inneren der Seilwindungen angeordnet sind.

13. Lagerung nach einem der Ansprüche 11 und 12, dadurch gekennzeichnet, dass entsprechend einer Anordnung jeder Versteifer (3K) ausserhalb des Seiles und jeder Versteifer (3L) innerhalb des Seils sich in gegensinniger Anordnung bezüglich des Steges (2K) befinden.

## Claims

1. A dampening antivibration and antishock support with a helically wound cable (1), preferably metallic, comprising a variable number of wires and strands, the spires of which are anchored on a small portion of each spire by at least two spaced bars (2), said support being characterized in that it comprises at least one stiffening means (3) which directly acts upon the cable between both of the anchoring bars so as to direct its motion under the effect of the load.

2. A support according to claim 1, characterized in that it also comprises prestress means (4).

3. A support according to any one of claims 1 and 2, characterized in that said bars (2) comprise said stiffening means (which permit to enhance the stiffness characteristics and/or to fulfil a function of progressive abutment according to one or several axes) as well as said shearing prestress means (4).

4. A support according to any one of claims 2 and 3, characterized in that the prestress means (4) are included between two half bars (2A-2B).

5. A support according to claim 4, characterized in that the shearing prestress means are made adjustable by a spreading device (4A) for both of the half bars (2A-2B).

6. A support according to claim 4, characterized in that the shearing prestress means are determined by wedges (4B) upon mounting.

7. A support according to any one of claims 1 and 3, characterized in that each stiffening means is made integrally with a bar.

8. A support according to any one of claims 1 and 3, characterized in that each stiffening means is added onto a bar by any suitable method.

9. A support according to any one of claims 1 and 3, and 7 and 8, characterized in that the bar – stiffeners assemblies comprise two stiffening wings on either side of the bar.

10. A support according to any one of claims 1 and 3, and 7 and 8, characterized in that a bar and a single stiffening wing constitute a bar-stiffener assembly.

11. A support according to any one of claims 9 and 10, characterized in that the bar-stiffeners assemblies and the bar-stiffener assemblies are disposed outwardly of the cable loops.

12. A support according to any one of claims 9 and 10, characterized in that the bar-stiffeners assemblies and the bar-stiffener assemblies are disposed inwardly of the cable loops.

13. A support according to any one of claims 11 and 12, characterized in that according to an arrangement each stiffener (3K) outwardly of the cable and each stiffener (3L) inwardly of the cable are disposed head to foot relative to the bar (2K).

FIG.1      FIG.1A      FIG.1B

FIG.2      FIG.2A      FIG.2B

FIG.12      FIG.13

FIG.14

FIG.3

FIG.4

FIG.5

FIG.6

FIG.6A

FIG.7

FIG.7A

FIG.8

FIG.9

FIG.10

FIG.11